(19)

Europäisches
Patentamt
European
Patent Office
Office européen
des brevets

(11) **EP 4 434 622 A1**

(12) **EUROPEAN PATENT APPLICATION**
published in accordance with Art. 153(4) EPC

(43) Date of publication:
**25.09.2024 Bulletin 2024/39**

(21) Application number: **22892328.0**

(22) Date of filing: **16.06.2022**

(51) International Patent Classification (IPC):
*B01J 23/96* (2006.01)      *B01D 53/86* (2006.01)
*B01D 53/96* (2006.01)      *B01J 23/46* (2006.01)

(52) Cooperative Patent Classification (CPC):
**B01D 53/86; B01D 53/96; B01J 23/46; B01J 23/96;**
Y02C 20/10

(86) International application number:
**PCT/JP2022/024117**

(87) International publication number:
**WO 2023/084825 (19.05.2023 Gazette 2023/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.11.2021   JP 2021185588**

(71) Applicant: **Sumitomo Chemical Company, Limited
Tokyo 103-6020 (JP)**

(72) Inventor: **WATANABE, Nobufumi
Niihama-shi, Ehime 792-8521 (JP)**

(74) Representative: **Global IP Europe
Patentanwaltskanzlei
Pfarrstraße 14
80538 München (DE)**

(54) **METHOD FOR REGENERATING CATALYST FOR NITROUS OXIDE DECOMPOSITION AND METHOD FOR DECOMPOSING NITROUS OXIDE**

(57)   Provided are a method of regenerating a nitrous oxide-decomposing catalyst such that a deactivated nitrous oxide-decomposing catalyst can be efficiently regenerated, and a method of decomposing nitrous oxide while using a nitrous oxide-decomposing catalyst regenerated by the regeneration method.
    Disclosed are:
a method of regenerating a nitrous oxide-decomposing catalyst, which includes the step of heat-treating a nitrous oxide-decomposing catalyst under a condition in an oxidizing gas atmosphere at a temperature of 175 to 325°C, in which the nitrous oxide-decomposing catalyst includes a titanium oxide-containing carrier carrying a component containing at least one kind selected from the group consisting of ruthenium and ruthenium compounds, and has been used for a nitrous oxide-decomposing reaction; and a method of decomposing nitrous oxide, which includes the step of bringing the nitrous oxide-decomposing catalyst regenerated by the regeneration method into contact with a nitrous oxide-containing gas containing nitrous oxide.

EP 4 434 622 A1

**Description**

FIELD OF THE INVENTION

The present invention relates to a method of regenerating a nitrous oxide-decomposing catalyst and a method of decomposing nitrous oxide.

BACKGROUND OF THE INVENTION

From the viewpoints of global environment protection and air pollution prevention, nitrogen oxides (NOx) in exhaust gas are regarded as a problem, and the emission thereof is strictly regulated. In particular, among nitrogen oxides is a nitrogen dioxide ($NO_2$), which is harmful to the human body and causes photochemical smog and acid rain and is thus a target of emission control. Here, various denitration techniques have been studied and put into practice in order to reduce the emission amount. However, nitrous oxide ($N_2O$), which is a kind of nitrogen oxide, is not currently subject to emission control, and is usually released into the atmosphere as it is. Actually, in the gas discharged from a chemical production plant, such as a nitric acid production plant, an $\varepsilon$-caprolactam production plant, an adipic acid production plant, nitrogen monoxide and nitrogen dioxide are decomposed and removed by denitration treatment, but nitrous oxide as a byproduct is often discharged (released) into the atmosphere without being decomposed and removed.

However, once a greenhouse gas such as nitrous oxide is released into the atmosphere, an increase in the level of greenhouse gas makes stronger the greenhouse effect on the atmosphere. This is considered to cause global warming. Nitrous oxide is then considered to elicit a warming effect about 300 times that of carbon dioxide. Thus, in recent years, there is an increasing interest in reducing emission of nitrous oxide into the atmosphere together with, for instance, carbon dioxide and methane. With the increase in sustainable environmental awareness, it is expected that nitrous oxide will be a target of emission gas control in the near future. Therefore, there is a need for a technology for decomposing and removing nitrous oxide from exhaust gas to suppress the amount of emission into the atmosphere. As a technology for decomposing and removing nitrous oxide from exhaust gas, for example, Patent Literature 1 describes a nitrous oxide decomposition method in which a gas containing nitrous oxide is catalytically decomposed in the co-presence of a reducing gas by using a catalyst characterized by carrying at least one or more kinds of noble metals selected from ruthenium (Ru), rhodium (Rh), palladium (Pd), rhenium (Re), osmium (Os), iridium (Ir), and platinum (Pt).

CITATION LIST

PATENT LITERATURE

Patent Literature 1: JP-A-H06-218232 ("JP-A" means unexamined published Japanese patent application)

SUMMARY OF THE INVENTION

TECHNICAL PROBLEM

Since the catalytic activity of a catalyst used for decomposing nitrous oxide (nitrous oxide-decomposing catalyst) is deactivated by use to decrease the efficiency of decomposing nitrous oxide, the catalyst deactivated to a certain level is replaced with a new catalyst and discarded. Disposal of the deactivated catalyst may increase the cost of decomposing nitrous oxide, and it is also important to reduce the disposal amount from the viewpoint of protecting the global environment. In addition, if nitrous oxide is subject to emission gas control in the future, the demand for the catalysts is also expected to increase. However, noble metals such as ruthenium have insufficient underground reserve and production (supply) amounts when compared to other metals. Therefore, there is a great advantage that the deactivated catalyst is reactivated and recycled to decompose nitrous oxide. However, in the present situation where emission of nitrous oxide contained in exhaust gas is not regulated, there is an increasing interest in study and establishment of a method of decomposing nitrous oxide. However, research on a technology for reactivating the deactivated catalyst has not been in progress. Reactivation and recycle of the catalyst are not described in Patent Literature 1.

The present invention addresses the problem of providing a method of regenerating a nitrous oxide-decomposing catalyst such that a deactivated nitrous oxide-decomposing catalyst can be efficiently regenerated. The present invention also addresses another problem of providing a method of decomposing nitrous oxide while using a nitrous oxide-decomposing catalyst regenerated by the above regeneration method.

SOLUTION TO PROBLEM

Specifically, the above problems of the present invention are solved by the following means.

<1> A method of regenerating a nitrous oxide-decomposing catalyst, which includes the step of heat-treating a nitrous oxide-decomposing catalyst under a condition in an oxidizing gas atmosphere at a temperature of 175 to 325°C, wherein the nitrous oxide-decomposing catalyst includes a titanium oxide-containing carrier carrying a component containing at least one kind selected from the group consisting of ruthenium and ruthenium compounds, and has been used for a nitrous oxide-decomposing reaction.
<2> The method of regenerating a nitrous oxide-decomposing catalyst described in <1>, wherein the oxidizing gas is air.
<3> A method of decomposing nitrous oxide, which includes the step of, after the method of regenerating a nitrous oxide-decomposing catalyst according to <1> or <2>, bringing the nitrous oxide-decomposing catalyst regenerated by the regeneration method into contact with a nitrous oxide-containing gas containing nitrous oxide.
<4> The method of decomposing nitrous oxide described in <3>, wherein the nitrous oxide-containing gas includes at least one gas selected from the group consisting of nitrogen, carbon monoxide, carbon dioxide, water vapor, oxygen, hydrogen, ammonia, nitrogen monoxide, nitrogen dioxide and hydrocarbons.

ADVANTAGEOUS EFFECTS OF INVENTION

The present invention can provide a method of regenerating a nitrous oxide-decomposing catalyst such that a deactivated nitrous oxide-decomposing catalyst can be efficiently regenerated, and a method of decomposing nitrous oxide while using a nitrous oxide-decomposing catalyst regenerated by the regeneration method.

DESCRIPTION OF EMBODIMENTS

A numerical value range indicated by using the term "to" in the present invention herein means a range including the numerical values described before and after the term "to" as the lower limit value and the upper limit value, respectively.
As used herein, unless otherwise specified, the term "nitrous oxide-decomposing catalyst" (sometimes simply referred to as a "catalyst") is used to mean the following including a nitrous oxide-decomposing catalyst not used for a nitrous oxide-decomposing reaction (the catalyst is also referred to as, for example, an unused catalyst or a new catalyst), a nitrous oxide-decomposing catalyst used for a nitrous oxide-decomposing reaction (the catalyst is also referred to as, for example, a used catalyst or a deteriorated catalyst), and a nitrous oxide-decomposing regenerated catalyst obtained by regenerating the deteriorated catalyst (the catalyst is also referred to as a regenerated catalyst).

[Method of regenerating nitrous oxide-decomposing catalyst]

The method of regenerating a nitrous oxide-decomposing catalyst according to the present invention (hereinafter, sometimes simply referred to as the "present regeneration method") includes a step of heat-treating a nitrous oxide-decomposing catalyst, which has been used in a nitrous oxide-decomposing reaction (decomposition method), under a condition in an oxidizing gas atmosphere at a temperature of 175 to 325°C. By this heat treatment step, as will be described later, the catalytic activity of the deteriorated catalyst with deactivated catalytic activity can be efficiently recovered or regained.

<Nitrous oxide-decomposing catalyst>

The deteriorated catalyst used in the present regeneration method is a catalyst, the catalytic activity of which has been deactivated after using, in a nitrous oxide-decomposing reaction, a nitrous oxide-decomposing catalyst including a titanium oxide-containing carrier carrying a component containing at least one kind selected from the group consisting of ruthenium and ruthenium compounds. Here, the nitrous oxide decomposition method, in which the deteriorated catalyst has been deactivated, is not particularly limited, and examples thereof include a "step of bringing it into contact with a nitrous oxide-containing gas" in the method of decomposing nitrous oxide according to the present invention described later.
The nitrous oxide-decomposing catalyst is a catalyst including a titanium oxide-containing carrier carrying a component containing at least one kind selected from the group consisting of ruthenium and ruthenium compounds.
As used herein, the "catalyst including a titanium oxide-containing carrier carrying a component containing at least one kind selected from the group consisting of ruthenium and ruthenium compounds" means a catalyst in which a component containing at least one kind selected from the group consisting of ruthenium and ruthenium compounds is attached to the surface and/or pores of a titanium oxide-containing carrier.

In the present invention, at least one kind selected from the group consisting of ruthenium and ruthenium compounds is selected as the component supported on the carrier from the viewpoint of balance between catalytic activity and cost.

(Ruthenium compound)

Examples of the ruthenium compound include, but are not particularly limited to, ruthenium oxide, ruthenium hydroxide, ruthenium nitrate, ruthenium chloride, chlororuthenate, chlororuthenate hydrate, a salt of ruthenic acid, ruthenium oxychloride, a salt of ruthenium oxychloride, a ruthenium ammine complex, a ruthenium ammine complex chloride, ruthenium bromide, a ruthenium carbonyl complex, a ruthenium organic acid salt, and a ruthenium nitrosyl complex.

Examples of the ruthenium oxide include $RuO_2$.

Examples of the ruthenium hydroxide include $Ru(OH)_3$.

Examples of the ruthenium nitrate include $Ru(NO_3)_3$.

Examples of the ruthenium chloride include $RuCl_3$ and $RuCl_3$ hydrate.

Examples of the chlororuthenate include a salt having $[RuCl_6]^{3-}$ as an anion, such as $K_3RuCl_6$, and a salt having $[RuCl_6]^{2-}$ as an anion, such as $K_2RuCl_6$, $(NH_4)_2RuCl_6$.

Examples of the chlororuthenate hydrate include a salt hydrate having $[RuCl_5(H_2O)_4]^{2-}$ as an anion and a salt hydrate having $[RuCl_2(H_2O)_4]^+$ as a cation.

Examples of the salt of ruthenic acid include $Na_2RuO_4$ and $K_2RuO_4$.

Examples of the ruthenium oxychloride include $Ru_2OCl_4$, $Ru_2OCl_5$, and $Ru_2OCl_6$.

Examples of the salt of ruthenium oxychloride include $K_2Ru_2OCl_{10}$ and $Cs_2Ru_2OCl_4$.

Examples of the ruthenium ammine complex include a complex having $[Ru(NH_3)_6]^{2+}$, $[Ru(NH_3)_6]^{3+}$, or $[Ru(NH_3)_5H_2O]^{2+}$ as a complex ion.

Examples of the chloride of ruthenium ammine complex include a complex having $[Ru(NH_3)_5Cl]^{2+}$ as a complex ion, and $[Ru(NH_3)_6]Cl_2$, $[Ru(NH_3)_6]Cl_3$, and $[Ru(NH_3)_6]Br_3$.

Examples of the ruthenium bromide include $RuBr_3$ and $RuBr_3$ hydrate.

Examples of the ruthenium carbonyl complex include $Ru(CO)_5$ and $Ru_3(CO)_{12}$.

Examples of the ruthenium organic acid salt include $[R_{U3}O(OCOCH_3)_6(H_2O)_3]OCOCH_3$ hydrate and $Ru_2(RCOO)_4Cl$ (R = an alkyl group having 1 to 3 carbon atoms).

Examples of the ruthenium nitrosyl complex include $K_2[RuCl_5NO]$, $[Ru(NH_3)_5(NO)]Cl_3$, $[Ru(OH)(NH_3)_4(NO)](NO_3)_2$, and $Ru(NO)(NO_3)_3$.

The ruthenium compound is preferably ruthenium oxide, ruthenium nitrate, ruthenium chloride, ruthenium bromide, a salt of ruthenium acid, or a ruthenium nitrosyl complex, and more preferably ruthenium oxide.

The component supported on the titanium oxide-containing carrier may contain at least one kind selected from the group consisting of ruthenium and ruthenium compounds, and may further contain, for example, a metal other than ruthenium and/or a metal compound other than the ruthenium compounds.

In the present invention, it is preferable that the catalyst is a catalyst comprising the titanium oxide-containing carrier further carrying at least one kind selected from the group consisting of metals other than ruthenium and metal compounds other than ruthenium compounds for the purpose of preventing a catalyst poisoning-causing substance from being adsorbed on the catalyst surface, preventing the performance of the catalyst from deteriorating, or preventing sintering of the catalytic active point.

Examples of the metal other than ruthenium include, but are not particularly limited to, silicon, zirconium, aluminum, niobium, tin, copper, iron, cobalt, nickel, vanadium, chromium, molybdenum, tungsten, manganese, antimony, and tellurium. Examples of the metal compound other than ruthenium compounds include, but are not particularly limited to, a compound having a metal other than ruthenium. Preferred is an oxide of the above-described metal other than ruthenium. The metal oxide may be a composite oxide containing a plurality of metal species. In addition, the catalyst may be a catalyst including the carrier further carrying an alloy of ruthenium and a metal other than ruthenium and/or a composite oxide containing ruthenium and a metal other than ruthenium.

The catalyst is more preferably a catalyst including the carrier that contains titanium oxide in rutile crystal form and further carries at least one kind of oxide selected from the group consisting of silicon oxide, zirconium oxide, aluminum oxide, niobium oxide, manganese oxide, antimony oxide, tellurium oxide, and tin oxide.

The metal salt used for obtaining the metal oxide is not particularly limited.

The content of at least one kind selected from the group consisting of ruthenium and ruthenium compounds in the catalyst is not particularly limited and is set, if appropriate. For example, the content is preferably from 0.1 to 20 mass%, more preferably from 0.5 to 10 mass%, and still more preferably from 1 to 5 mass% in terms of metal ruthenium.

The content of at least one kind selected from the group consisting of ruthenium and ruthenium compounds in terms of metal ruthenium is preferably from 0.1 to 20 mass%, more preferably from 0.5 to 10 mass%, and still more preferably from 1 to 5 mass% based on the total 100 mass% of the carrier and the component containing at least one kind selected from the group consisting of ruthenium and ruthenium compounds.

The contents of the metal other than ruthenium, the metal compound other than ruthenium compounds, and others in the catalyst are not particularly limited, and can be set, if appropriate, depending on the above purpose.

(Carrier)

The carrier may be any carrier as long as it contains titanium oxide, and may contain, for instance, another compound(s) described later. The crystal form of titanium oxide constituting the carrier is not particularly limited, and may be any of a rutile crystal form, an anatase crystal form, or a brookite crystal form. In the present invention, the carrier is preferably composed of titanium oxide and contains titanium oxide in a rutile crystal form. From the viewpoint of catalytic activity, the content of titanium oxide in a rutile crystal form in the titanium oxide contained in the carrier is preferably 20 mass% or larger, more preferably 30 mass% or larger, still more preferably 80 mass% or larger, and still more preferably 90 mass% or larger based on total 100 mass% of the titanium oxide contained in the carrier.

In the present invention, the titanium oxide containing titanium oxide in a rutile crystal form refers to titanium oxide containing a rutile crystal among rutile crystals and anatase crystals, the ratio of which is measured by X-ray diffraction analysis. Various radiation sources are used as the X-ray source. Examples thereof include copper Kα radiation. In the case of using copper Kα radiation, the ratio of rutile crystals and the ratio of anatase crystals are determined using the intensity of a diffraction peak at $2\theta = 27.5$ degrees in the (110) plane and the intensity of a diffraction peak at $2\theta = 25.3$ degrees in the (101) plane, respectively. The carrier used in the present invention is a carrier having a peak intensity of rutile crystal and a peak intensity of anatase crystal, or a carrier having a peak intensity of rutile crystal. That is, the carrier may have both the diffraction peak of rutile crystal and the diffraction peak of anatase crystal, or may have only the diffraction peak of rutile crystal.

Examples of other compounds that may be contained in the carrier include metal oxides other than titanium oxide, composite oxides of titanium oxide and other metal oxides, and mixtures of titanium oxide and other metal oxides. Examples of the metal oxide other than titanium oxide include aluminum oxide, silicon oxide, and zirconium oxide.

Titanium oxide prepared by a known method may be used, and commercially available products may also be used.

Examples of the method for preparing titanium oxide in a rutile crystal form include the following methods:

a method in which titanium tetrachloride is added dropwise to ice-cooled water and dissolved, and neutralized with an aqueous ammonia solution at a temperature of 20°C or higher to produce titanium hydroxide (orthotitanic acid), and, the generated precipitate was washed with water to remove chlorine ions, and is calcinated at a temperature of 600°C or higher (Catalyst Preparation Chemistry, 1989, p. 211, Kodansha Ltd.);

a method in which an oxygen-nitrogen mixed gas is made to pass through a titanium tetrachloride evaporator to prepare a reaction gas, and the resulting gas is introduced into a reactor and reacted at 900°C or higher (Catalyst Preparation Chemistry, 1989, p. 89, Kodansha Ltd.);

a method in which titanium tetrachloride is hydrolyzed in the presence of ammonium sulfate and then calcinated (e.g., Catalyst Engineering Course, Handbook of Catalysts Using Any of 10 Elements, 1978, p. 254, Chijinshokan, Co. Ltd.);

a method for calcinating titanium oxide in an anatase crystal form (e.g., Metal Oxides and Composite Oxides, 1980, p. 107, Kodansha Ltd.);

a method for thermally hydrolyzing a titanium chloride aqueous solution; and

a method in which a titanium compound (e.g., titanium sulfate, titanium chloride)-containing aqueous solution is mixed with rutile crystalline titanium oxide powder, the mixture is subsequently subjected to thermal hydrolysis or alkali hydrolysis, and then calcinated at a temperature around 500°C.

The carrier can be obtained by molding, for instance, titanium oxide into a desired shape. When the carrier contains, for instance, a compound other than titanium oxide, the carrier can be obtained by molding a mixture of titanium oxide and another compound(s) into a desired shape.

The shape of the catalyst (carrier) is not particularly limited, and examples thereof include spherical particles, cylindrical pellets, a ring shape, a honeycomb shape, a monolith shape, a corrugated shape, or microparticles or granules with a suitable size as pulverized and classified after molding. In the case of spherical particles, cylindrical pellets, or rings, the catalyst diameter is preferably 10 mm or less from the viewpoint of catalytic activity. Note that the catalyst diameter herein means the diameter of a sphere in the case of spherical particles, the diameter of a cross section in the case of cylindrical pellets, or the maximum diameter of a cross section in the case of other shapes.

The catalyst may be prepared by a method including: impregnating a titanium oxide-containing carrier with a solution containing at least one kind selected from the group consisting of ruthenium and ruthenium compounds; attaching, to the carrier, a component containing at least one kind selected from the group consisting of ruthenium and ruthenium compounds; and then drying the carrier. The solvent in the solution containing the component containing at least one kind selected from the group consisting of ruthenium and ruthenium compounds is not particularly limited. The solvent used may be, for instance, water and/or ethanol. After drying, the resulting carrier may be calcinated.

When the catalyst contains ruthenium oxide, for example, the catalyst can be obtained by a method including the steps of: impregnating a titanium oxide-containing carrier with a solution containing ruthenium halide to support the ruthenium halide on the carrier; drying the carrier material supported on the ruthenium halide-carrying carrier; and calcinating the dried product.

The catalyst may be diluted with an inert substance and then used.

The deteriorated catalyst used in the present regeneration method may have been used in a nitrous oxide decomposition method to lose its catalytic activity. How much the catalytic activity has been deactivated before the deteriorated catalyst is regenerated is appropriately determined. For example, the "regeneration rate" (ratio between reaction rate constants for the nitrous oxide-decomposing reaction) in Examples described later may be 0.89 or less or 0.88 or less.

Details (e.g., the chemical structure, structural changes, physical properties) of the catalyst deactivated by the nitrous oxide-decomposing reaction are not considered to be unique depending on, for instance, the type of catalyst (compound species), and are thus not yet clear. For example, in the case of ruthenium oxide, it is considered that the following has lost the function of promoting the decomposition of nitrous oxide, including a reduced form of ruthenium oxide, ruthenium oxide particles poisoned by adsorption of, for instance, components in the nitrous oxide-containing gas, or ruthenium oxide particles less dispersed due to sintering of the ruthenium oxide particles.

<Oxidizing gas>

The oxidizing gas used in the present regeneration method may be any gas that exhibits a characteristic of oxidizing a specific substance and reducing itself, and examples thereof include a gas containing an oxidizing substance, and typically include an oxygen-containing gas. The oxygen-containing gas may usually contain an oxygen gas, and examples thereof include air or a gas obtained by diluting an oxygen gas with, for instance, an inert gas. Here, air is preferable. The oxygen gas is not particularly limited, and examples thereof usually include air and pure oxygen. The inert gas may be any gas substantially free of an oxidizing substance, and examples thereof include rare earth gas, such as helium, neon and argon, nitrogen gas, carbon monoxide gas, carbon dioxide gas, and hydrocarbon gas. Here, nitrogen gas is preferable. Meanwhile, the oxidizing gas may contain moisture.

The level of oxygen in the oxygen-containing gas is determined, if appropriate, according to, for instance, regeneration conditions, and may be usually from 0.1 to 100 mol%, preferably from 2 to 50 mol%, and more preferably from 4 to 30 mol%.

<Method of regenerating nitrous oxide-decomposing catalyst>

In the present regeneration method, the deteriorated catalyst is heat-treated under a condition in an oxidizing gas atmosphere at a temperature of 175 to 325°C. This heat treatment step makes it possible to recover the deactivated catalytic activity to regenerate the catalyst having been deteriorated. For example, when the deterioration of the catalyst is caused by a reducing reaction, it is considered that an oxidizing reaction can cause the catalyst to be regenerated.

The heat treatment step is performed under an oxidizing gas atmosphere, preferably under an oxidizing gas stream. This step may be a batch type or a continuous type as long as it can be performed in an oxidizing gas atmosphere. However, a continuous type is preferable in terms of, for instance, workability and regeneration efficiency. Examples of the continuous type include a fixed bed type and a fluidized bed type.

The heat treatment temperature is determined, if appropriate, within a range of 175 to 325°C, but is preferably from 180 to 320°C and more preferably from 185 to 315°C from the viewpoint of the efficiency of regenerating the deteriorated catalyst. The heating method is not particularly limited, and examples thereof include an ordinary heating method using, for instance, any of various heaters. Note that the oxidizing gas may be heated in advance and brought into contact with the deteriorated catalyst. At the heat treatment temperature in the present invention, the heat source used in the contact step can also be used in the method of heating the oxidizing gas, and the deteriorated catalyst can be efficiently regenerated while reducing the cost of the regeneration step.

The heat treatment time is determined, if appropriate, according to, for instance, the concentration or supply rate of the oxidizing substance in the oxidizing gas and/or the heat treatment temperature, and can be set to, for example, from 0.5 to 100 hours, from 1 to 50 hours, or from 1.5 to 25 hours, which is a relatively short time.

When the continuous heat treatment is performed, the supply rate of the oxidizing gas with respect to the weight of the catalyst is not particularly limited, and is determined, if appropriate, according to the type, concentration, or others of the oxidizing substance. For example, the flow rate at 0°C and 0.1013 MPa (absolute) with respect to 1 g of the catalyst is preferably from 1 to 350 cm$^3$/min and more preferably from 3.5 to 300 cm$^3$/min.

The pressure during the heat treatment can be determined, if appropriate, in consideration of the heat treatment temperature, the supply rate of the oxidizing gas, the pressure of the ambient outside air, and others. For example, the absolute pressure may be from 0.08 to 1 MPa (absolute), and is preferably from 0.09 to 0.7 MPa (absolute).

The present regeneration method makes it possible to recover the catalytic activity of the deteriorated catalyst and thus highly efficiently regenerate the deteriorated catalyst even when the heat treatment time is a relatively short time. The catalyst regeneration efficiency in the present regeneration method cannot be unequivocally determined by using the above-described heat treatment conditions, further the heat treatment scale and others. However, the "regeneration rate" in Examples described later may be, for example, 0.90 or more and preferably 0.93 or more. In this way, the regeneration can be carried out.

<Other steps>

The present regeneration method may include a step(s) other than the heat treatment step. Examples include: a step of circulating an inert gas until a heat treatment temperature is reached in the case of performing a continuous heat treatment step; a step of collecting a deteriorated catalyst from a nitrous oxide-decomposing apparatus; a step of pulverizing and crushing the collected deteriorated catalyst; a step of re-molding the catalyst; and/or a step of further filling the decomposing apparatus with the regenerated catalyst.

[Method of decomposing nitrous oxide]

The method of decomposing nitrous oxide according to the present invention (hereinafter, sometimes simply referred to as the "present decomposition method") is a method including a step of bringing a regenerated catalyst regenerated by the present regeneration method described above into contact with a nitrous oxide-containing gas containing nitrous oxide (gas). The present decomposition method includes the present regeneration method as a step of regenerating a deteriorated catalyst, and a contact step of bringing the regenerated catalyst regenerated by this regeneration method into contact with a nitrous oxide-containing gas.

The present decomposition method may be a method including the present regeneration method and the contact step, and the regeneration method and the contact step may be alternately repeated a plurality of times. The method of alternately repeating the contact step and the regeneration method a plurality of times is preferably a method in which the catalyst deteriorated in the contact step is regenerated in the regeneration step as the next step, and the obtained regenerated catalyst is used in the contact step as the next step. In the present invention, each of the regeneration method and the contact step may be performed a plurality of times before moving to the next step. In the present invention, prior to the regeneration method, a nitrous oxide decomposition step (contact step) can be performed using an unused catalyst. This decomposition step is the same as the contact step described later except that an unused catalyst is used.

In the present invention, the timing at which the regeneration method is performed (the timing at which the contact step is switched to the regeneration method) is not particularly limited. The contact step and the regeneration method can be switched at an appropriate timing even when they can be performed using the same apparatus (equipment). For example, the contact step can be switched to the regeneration method during or after the contact step regardless of the amount of catalyst deactivated in the contact step. Preferably, the contact step should be switched to the regeneration method at a timepoint where the activity of the catalyst is found to be decreased by performing the contact step, for example, at a timepoint where the prescribed deactivation amount is reached.

<Regenerated catalyst>

The regenerated catalyst used in the contact step is a catalyst regenerated by the above-described present regeneration method, and the details thereof are as described above.

<Nitrous oxide-containing gas>

The nitrous oxide-containing gas used in the contact step may be any gas as long as containing nitrous oxide, and may contain an inert gas as a dilution gas. The nitrous oxide-containing gas preferably contains nitrous oxide and at least one gas selected from the group consisting of nitrogen, carbon monoxide, carbon dioxide, water vapor, oxygen, hydrogen, ammonia, nitrogen monoxide, nitrogen dioxide, and hydrocarbons (including saturated hydrocarbons and unsaturated hydrocarbons). In addition, an inert gas may be included. The content (concentration) of each gas in the nitrous oxide-containing gas is not particularly limited, and can be set, if appropriate. For example, the content may be the same as that of the preferred nitrous oxide-containing gas described later.

The nitrous oxide-containing gas may contain a liquid. In the present decomposition method, the nitrous oxide-containing gas only needs to be a gas at least while being in contact with the catalyst (under reaction conditions), and may be a liquid or a mixture of a gas and a liquid before contact.

The nitrous oxide-containing gas used in the preferred contact step described later (sometimes referred to as a preferred nitrous oxide-containing gas) may contain one kind or two or more kinds of gases other than nitrous oxide, water vapor and ammonia as long as the gas contain nitrous oxide, water vapor and ammonia. Examples of such a gas include each gas, such as oxygen, helium, argon, nitrogen and carbon dioxide, and a reducing gas described later.

The content (concentration) of each component in the preferred nitrous oxide-containing gas is not particularly limited and can be set, if appropriate. However, it is usually efficient to use the nitrous oxide-containing gas almost as it is while having a value specific to a factory from which the nitrous oxide-containing gas is discharged, except for a component having a special effect. Thus, for example, the mole concentration of nitrous oxide in the preferred nitrous oxide-containing gas is generally and preferably from 0.002 to 10 mol%. The mole concentration of water vapor is generally and preferably from 0.1 to 10 mol%. The mole concentration of ammonia in the preferred nitrous oxide-containing gas is preferably 0.0002 mol% or higher and preferably 1 mol% or less from the viewpoint of the efficiency of decomposing nitrous oxide. The mole concentration of ammonia is more preferably from 0.0002 to 0.5 mol%, and still more preferably from 0.0002 to 0.2 mol%.

The content ratio [ammonia/water vapor] of ammonia to water vapor contained in the preferred nitrous oxide-containing gas is not particularly limited and can be set, if appropriate. However, the content ratio is preferably 0.0010 or more as a molar ratio from the viewpoint of the efficiency of decomposing nitrous oxide. The molar ratio is more preferably from 0.0010 to 0.050, and more preferably from 0.0010 to 0.030, and still more preferably from 0.0010 to 0.010 from the viewpoint of potentially suppressing or avoiding the problem of remaining ammonia (discharging into the air and removal workability). In addition, the content ratio [ammonia/nitrous oxide] of ammonia to nitrous oxide contained in the preferred nitrous oxide-containing gas is not particularly limited and can be set, if appropriate. However, the content ratio is preferably from 0.005 to 10 as a molar ratio.

When the preferred nitrous oxide-containing gas contains an oxygen gas, the content of oxygen gas in the preferred nitrous oxide-containing gas is not particularly limited and can be set, if appropriate. However, the content is preferably 0.01 to 10000 mole times the content of ammonia in the preferred nitrous oxide-containing gas. When the preferred nitrous oxide-containing gas is free of oxygen gas, for example, the mixture can be obtained by mixing the preferred nitrous oxide-containing gas and an oxygen-containing gas. Examples of the oxygen-containing gas include air.

The preferred nitrous oxide-containing gas may also contain a reducing gas in order to further increase the efficiency of decomposing nitrous oxide. Similarly, in order to further increase the efficiency of decomposing nitrous oxide, it is possible to include a saturated hydrocarbon gas that is contained in the nitrous oxide-containing gas or reacts with oxygen generated in a reactor to be a raw material for generating a reducing gas such as a carbon monoxide gas. In view of the efficiency of decomposing nitrous oxide, a method of including a reducing gas in a preferred nitrous oxide-containing gas is preferable. The reducing gas may be any reducing gas other than ammonia, and those used in a general catalytic reduction method can be used without particular limitation. Examples thereof include an unsaturated hydrocarbon gas, such as ethylene, propylene, α-butylene and β-butylene, a carbon monoxide gas, a hydrogen gas, and a gas of alcohol compound, such as methanol, ethanol, propanol and butanol. Among them, at least one kind of a carbon monoxide gas, unsaturated hydrocarbon gas and hydrogen gas is preferable. Examples of the saturated hydrocarbon gas as a raw material for generating a reducing gas, such as a carbon monoxide gas include methane, ethane, propane, and n-butane. Examples of the preferred saturated hydrocarbon gas include ethane, propane, and n-butane. The saturated hydrocarbon gas may be included using a gas mixture, such as natural gas, liquefied natural gas, and liquefied petroleum gas.

The content of the reducing gas or the saturated hydrocarbon gas in the preferred nitrous oxide-containing gas is not particularly limited, and can be set, if appropriate. For example, the mole concentration of the reducing gas or the saturated hydrocarbon gas in the preferred nitrous oxide-containing gas is from 0.001 to 1 mol%. The molar ratio [reducing gas or saturated hydrocarbon gas/water vapor] of the reducing gas or the saturated hydrocarbon gas to water vapor in the preferred nitrous oxide-containing gas is preferably from 0.0003 to 0.03. In addition, the content ratio [reducing gas or saturated hydrocarbon gas/nitrous oxide] of the reducing gas or saturated hydrocarbon gas to nitrous oxide contained in the preferred nitrous oxide-containing gas is from 0.01 to 100 as a molar ratio.

The nitrous oxide-containing gas may be prepared by appropriately mixing nitrous oxide and water vapor, ammonia, and the above-mentioned other gases. In addition, various exhaust gases discharged from a chemical production plant can also be used. For example, a gas discharged from a chemical production plant, such as a nitric acid production plant, an ε-caprolactam production plant and an adipic acid production plant often contains, in addition to nitrous oxide, water vapor and ammonia, and further contains oxygen gas, and can be effectively utilized in the preferred contact step described later. In particular, the exhaust gas may satisfy, for instance, the content and the content ratio in the above ranges. This is preferable from the viewpoint that the exhaust gas, without adjusting the content, is applicable, as it is, to the preferred contact step.

<Contact step>

The contact step may be any step as long as the nitrous oxide-decomposing catalyst is brought into contact with a nitrous oxide-containing gas containing nitrous oxide. A contact step in a known method of decomposing nitrous oxide can be applied except that the nitrous oxide-decomposing catalyst to be used is the above regenerated catalyst. Examples of the contact step in the known method of decomposing nitrous oxide include a method (step) described in Patent Literature 1 in which a catalyst and nitrous oxide are brought into contact with each other in the co-presence of a reducing gas. The contact step in the present invention is preferably a step of bringing the nitrous oxide-decomposing regenerated catalyst into contact with a nitrous oxide-containing gas containing nitrous oxide, water vapor and ammonia (sometimes referred to as a "preferred contact step").

In the contact step, the nitrous oxide-containing gas and the regenerated catalyst are brought into contact with each other.

The contact method is not particularly limited, and may be, for example, a batch type or a continuous type. Here, a continuous type is preferable from the viewpoint of reaction efficiency. Examples of the continuous type include a fixed bed type and a fluidized bed type.

In the contact step, nitrous oxide in the nitrous oxide-containing gas comes into contact with the regenerated catalyst. Accordingly, even in the co-presence of water vapor, a nitrous oxide-decomposing reaction shown in the following formula occurs. As a result, the nitrous oxide is efficiently decomposed into nitrogen molecules and oxygen molecules.

$$\text{Nitrous oxide-decomposing reaction:} \qquad N_2O \rightarrow N_2 + 1/2O_2$$

In the above preferred contact step, ammonia in the nitrous oxide-containing gas further promotes the nitrous oxide-decomposing reaction. Details of the mechanism of action are not yet clear, but are considered as follows. For example, in the presence of a catalyst exhibiting a reducing action, such as a ruthenium-carrying catalyst, it is presumed that ammonia reacts with nitrous oxide on the surface of the catalyst, whereby nitrous oxide is decomposed into nitrogen molecules and water molecules to be able to further promote the nitrous oxide-decomposing reaction. On the other hand, in the presence of a catalyst that does not exhibit a reducing action, such as a ruthenium oxide-carrying catalyst, it is presumed that oxygen atoms are removed from the catalyst surface by reacting with oxygen atoms remaining on the catalyst surface to maintain the catalytic activity (suppress deactivation of the catalyst), so that the decomposition reaction can be promoted.

When a known step is applied as the contact step, an appropriate method and conditions that can be employed in each step can be used, if appropriate, as the contact method and the contact conditions.

Examples of the contact conditions in the preferred contact step include, but are not particularly limited to, the following conditions. The contact temperature (reaction temperature) is determined, if appropriate, but is preferably 500°C or lower from the viewpoint of catalyst activity deterioration, and is preferably 100°C or higher from the viewpoint of reaction rate. The contact temperature is preferably from 200 to 450°C and more preferably from 250 to 400°C. In the continuous contact method, the rate of supplying the nitrous oxide-containing gas with respect to the weight of the catalyst is not particularly limited and is determined, if appropriate. For example, the flow rate at 0°C and 0.1013 MPa (absolute) based on 1 g of the catalyst is preferably from 10 to 10000 cm$^3$/min and more preferably from 50 to 5000 cm$^3$/min. The contact time is determined, if appropriate, according to the concentration of nitrous oxide in the nitrous oxide-containing gas or its supply rate, the contact temperature, and others. The reaction pressure varies depending on, for instance, the contact temperature, the rate of supplying the nitrous oxide-containing gas, or the pressure of the outside air around the reactor. The reaction pressure is preferably a pressure higher than the outside air pressure, and is preferably from 0.08 to 1 MPa (absolute) as an absolute pressure, and more preferably from 0.09 to 0.7 MPa (absolute) as an absolute pressure.

<Other steps>

The present decomposition method may include a step(s) other than the regeneration method and the contact step. Examples thereof include a contact step using the above-mentioned unused catalyst, a step of adjusting the content of a component(s) in the nitrous oxide-containing gas, and/or a step of introducing an oxygen gas or a reducing gas into the nitrous oxide-containing gas.

In the present decomposition method, the regeneration method and the contact step can be performed in the same apparatus (reactor) or in different apparatuses. When the regeneration method and the contact step are continuously performed, it is preferable to use the same apparatus from the viewpoint of easy transition by changing the gas to be supplied. When the contact step is performed continuously, a tubular or tower-type reactor, such as a metal tube and a column tower can be used, and more specifically, various fixed bed reactors can be used.

The present decomposition method includes a step of recovering the activity of catalyst deactivated in the nitrous oxide decomposition step. The nitrous oxide-decomposing catalyst can be recycled in the nitrous oxide decomposition step. Therefore, the present decomposition method can reduce the cost of decomposing nitrous oxide and can further reduce the amount of catalyst discarded. In addition, the deteriorated catalyst can be efficiently regenerated by the regeneration method. This makes it possible to decompose nitrous oxide while suppressing a decrease in decomposition efficiency at the decomposition step. Also, a plurality of decomposition steps can be continuously performed.

In particular, in the continuous type, circulation (flow) of the nitrous oxide-containing gas through the catalyst efficiently enables the decomposition of nitrous oxide, thereby capable of reducing emission of nitrous oxide. Further, in a preferred contact step, ammonia in the nitrous oxide-containing gas can also be efficiently decomposed, so that the discharge of ammonia can be suppressed.

The present decomposition method can be used in various fields and applications for decomposing and removing nitrous oxide. For example, the method can be used in a chemical production plant. In particular, they can be suitably used in a chemical production plant, such as a nitric acid production plant, an $\varepsilon$-caprolactam production plant and an adipic acid production plant, that discharges a gas containing nitrous oxide, ammonia and water vapor.

When the present decomposition method is applied to an existing production plant, the position, where the apparatus for implementing the present decomposition method is installed, is not particularly limited. Here, the decomposition apparatus is usually incorporated in the last stage in the flowing direction of the exhaust gas, for example, in a stage before the discharge tower. Specifically, in the case of a nitric acid production plant, the apparatus is incorporated in a stage after the denitration reactor.

EXAMPLES

Hereinafter, Examples of the present invention will be described. The present invention, however, is not limited thereto.

The space velocity GHSV ($h^{-1}$) of the reaction of decomposing nitrous oxide was calculated by dividing the supply rate ($cm^3$ (at 0°C and 0.1013 MPa (absolute))/hour) of the reaction gas by the catalyst volume ($cm^3$).

A reaction outlet gas (post-reaction gas) after the nitrous oxide-decomposing reaction was analyzed as follows. The concentration $C_B$ of nitrous oxide in the nitrous oxide-containing gas and the concentration $C_A$ of nitrous oxide in the reaction outlet gas were analyzed using gas chromatography (Micro GC (detector: Micro TCD; column: CP-PoraPLOT Q 10 m) manufactured by VARIAN). The analyzed nitrous oxide concentrations were then used to calculate the rate of decreasing the nitrous oxide concentration from the following formula.

$$\text{Rate X (\%) of decreasing nitrous oxide concentration} = [(C_B - C_A)/C_B] \times 100$$

The reaction rate constant ($s^{-1}$) was determined from the nitrous oxide-decreasing rate X (%) and the reaction gas space velocity GHSV ($h^{-1}$) by the following formula.

$$\text{Reaction rate constant (s}^{-1}) = -\ln(1 - X/100)/(3600/GHSV)$$

Here, ln(1 - X/100) represents a natural logarithm of (1 - X/100).

<Production Example 1>

As described below, a $RuO_2/TiO_2$ catalyst was produced as a nitrous oxide-decomposing catalyst, used for a nitrous oxide-decomposing reaction, and deteriorated.

(To produce new catalyst (a) for decomposing nitrous oxide)

A titanium oxide molding (cylindrical pellet having a diameter of 3 mm and a length of 4 to 6 mm) obtained by extruding titanium oxide powder (manufactured by Showa Denko K. K.) was used as a catalyst carrier.

First, 1.6 g of ruthenium chloride hydrate ($RuCl_3 \cdot nH_2O$; Ru content: 40%; manufactured by Furuya Metal Co., Ltd.) was dissolved in 4.0 g of ion-exchanged water. The resulting solution was impregnated into 20.0 g of titanium oxide-made carrier by an incipient wetness method, and the resulting material was then air-dried at room temperature (25°C) overnight in an air atmosphere to obtain each titanium oxide solid carrying ruthenium chloride hydrate.

The obtained solid was filled into a quartz glass tube provided with a sheath tube for measuring an internal temperature. The temperature was then raised to a furnace temperature of 250°C under air flow at 200 $cm^3$ (0°C, 0.1013 MPa (absolute))/min by using an electric tube furnace. Subsequently, the solid was held at the same temperature for 2 hours for calcination. The temperature in the quartz glass tube at an electric tube furnace temperature of 250°C was 275°C. The calcination caused 20.9 g of $RuO_2/TiO_2$ catalyst containing 4.0 mass% of ruthenium oxide (Ru content: 3.0 mass%; cylindrical pellet). A new catalyst (a), which had been obtained by pulverizing the resulting cylindrical pellet-shaped $RuO_2/TiO_2$ catalyst and sieving the pulverized catalyst into 1.0 to 1.7 mm granules, was used in the following Examples.

(Contact step using new catalyst)

First, 0.06 g (0.05 cm$^3$) of the new catalyst (a) obtained was filled in a quartz glass reaction tube (inner diameter: 8 mm) equipped with a quartz glass sheath tube for measuring the internal temperature. The reaction tube was placed in an electric furnace, and the temperature inside the quartz glass reaction tube was raised to 300°C under normal pressure (0.1 MPa (absolute)) and helium gas flow at 100 cm$^3$ (0°C, 0.1013 MPa (absolute))/min. Subsequently, at the same pressure and the same temperature, a gas to be brought into contact with the new catalyst (a) was switched to a mixed gas containing 0.10 mol% of nitrous oxide, 1.50 mol% of oxygen, and the remainder nitrogen (flow rate: 24.6 cm$^3$ (0°C, 0.1013 MPa (absolute))/min) to perform a reaction of decomposing nitrous oxide. In this decomposition reaction, the reaction rate constant when the decomposition reaction started to be stable was 5.8 s$^{-1}$. The time when the decomposition reaction started to be stable was the time when the variation in the reaction rate constant became ± 1% or less.

<Production Example 2>

(Contact step using new catalyst)

First, 1.24 g (1.0 cm$^3$) of the cylindrical pellet-shaped $RuO_2/TiO_2$ catalyst obtained in Production Example 1 was filled in a stainless steel reaction tube (inner diameter: 156 mm) equipped with a stainless steel sheath tube for measuring the internal temperature. The reaction tube was placed in an electric furnace, and the temperature inside the stainless steel reaction tube was raised to 300°C under normal pressure (0.1 MPa (absolute)) and nitrogen gas flow at 500 cm$^3$ (0°C, 0.1013 MPa (absolute))/min. Next, at the same pressure and the same temperature, a gas to be brought into contact with the $RuO_2/TiO_2$ catalyst was switched to exhaust gas from a nitric acid production plant to decompose nitrous oxide.

The exhaust gas from a nitric acid production plant was collected in a gas sampling bag, and the exhaust gas was analyzed by gas chromatography using a gas detection tube (water vapor 6, ammonia 3M). As a result, the main component of the exhaust gas was nitrogen, and the exhaust gas contained 0.01 mol% of nitrous oxide, 1.50 mol% of oxygen, 0.40 mol% of water vapor, and 0.05 mol% of ammonia.

The cylindrical pellet-shaped $RuO_2/TiO_2$ catalyst taken out from the reaction tube 400 hours after the start of the nitrous oxide-decomposing reaction was pulverized and sieved into 1.0 to 1.7 mm granules to obtain a deteriorated catalyst (b).

(Second contact step)

First, 0.06 g (0.05 cm$^3$) of the deteriorated catalyst (b) obtained was filled in a quartz glass reaction tube (inner diameter: 8 mm) equipped with a quartz glass sheath tube for measuring the internal temperature. The reaction tube was placed in an electric furnace, and the temperature inside the quartz glass reaction tube was raised to 300°C under normal pressure (0.1 MPa (absolute)) and helium gas flow at 100 cm$^3$ (0°C, 0.1013 MPa (absolute))/min. Subsequently, at the same pressure and the same temperature, a gas to be brought into contact with the deteriorated catalyst (b) was switched to a mixed gas containing 0.10 mol% of nitrous oxide, 1.50 mol% of oxygen, and the remainder nitrogen (flow rate: 24.6 cm$^3$ (0°C, 0.1013 MPa (absolute))/min) to perform a second reaction of decomposing nitrous oxide. In this decomposition reaction, the reaction rate constant when the decomposition reaction started to be stable was 5.1 s$^{-1}$. The time when the decomposition reaction started to be stable was the time when the variation in the reaction rate constant became ± 1% or less.

<Example 1>

(Regeneration step)

First, 0.06 g (0.05 cm$^3$) of the deteriorated catalyst (b) obtained in the above Production Example 2 was filled in a quartz glass reaction tube (inner diameter: 26.5 mm) equipped with a quartz glass sheath tube for measuring the internal temperature. The reaction tube was placed in an electric furnace, and air was flowed under normal pressure (0.1 MPa (absolute)) at 6.8 $cm^3$ (0°C, 0.1013 MPa (absolute))/min. The temperature was then raised until the electric furnace temperature reached 200°C. Thereafter, heat treatment was performed at a temperature of 200°C for 3 hours to obtain a regenerated catalyst 1.

(Contact step)

The regenerated catalyst 1 obtained was filled in a quartz glass reaction tube (inner diameter: 8 mm) equipped with a quartz glass sheath tube for measuring the internal temperature. The reaction tube was placed in an electric furnace, and the temperature inside the quartz glass reaction tube was raised to 300°C under normal pressure (0.1 MPa (absolute)) and helium gas flow at 100 $cm^3$ (0°C, 0.1013 MPa (absolute))/min. Subsequently, at the same pressure and the same temperature, a gas to be brought into contact with the regenerated catalyst 1 was switched to a mixed gas containing 0.10 mol% of nitrous oxide, 1.50 mol% of oxygen, and the remainder nitrogen (flow rate: 24.6 $cm^3$ (0°C, 0.1013 MPa (absolute))/min) to perform a reaction of decomposing nitrous oxide. In this decomposition reaction, the reaction rate constant when the decomposition reaction started to be stable was 7.0 $s^{-1}$. The time when the decomposition reaction started to be stable was the time when the variation in the reaction rate constant became ± 1% or less. Regarding this reaction rate constant, Table 1 shows the regeneration rate of the regenerated catalyst 1 when the reaction rate constant (5.8 $s^{-1}$) of the nitrous oxide-decomposing reaction using the new catalyst (a) in Production Example 1 is set to 1.

<Example 2>

A regeneration step and a nitrous oxide contact step were performed in the same manner as in Example 1 except that in the regeneration step of Example 1, the electric furnace temperature was raised to 250°C, and heat treatment was then performed at a temperature of 250°C for 3 hours to obtain a regenerated catalyst 2. In this decomposition reaction, the reaction rate constant when the decomposition reaction started to be stable was 6.9 $s^{-1}$. The time when the decomposition reaction started to be stable was the time when the variation in the reaction rate constant became ± 1% or less. Regarding this reaction rate constant, Table 1 shows the regeneration rate of the regenerated catalyst 2 when the reaction rate constant of the nitrous oxide-decomposing reaction using the new catalyst (a) in Production Example 1 is set to 1.

<Example 3>

A regeneration step and a nitrous oxide contact step were performed in the same manner as in Example 1 except that in the regeneration step of Example 1, the electric furnace temperature was raised to 300°C, and heat treatment was then performed at a temperature of 300°C for 3 hours to obtain a regenerated catalyst 3. In this decomposition reaction, the reaction rate constant when the decomposition reaction started to be stable was 7.9 $s^{-1}$. The time when the decomposition reaction started to be stable was the time when the variation in the reaction rate constant became ± 1% or less. Regarding this reaction rate constant, Table 1 shows the regeneration rate of the regenerated catalyst 3 when the reaction rate constant of the nitrous oxide-decomposing reaction using the new catalyst (a) in Production Example 1 is set to 1.

<Comparative Example 1>

A regeneration step and a nitrous oxide contact step were performed in the same manner as in Example 1 except that in the regeneration step of Example 1, the electric furnace temperature was raised to 150°C, and heat treatment was then performed at a temperature of 150°C for 3 hours to obtain a regenerated catalyst C1. In this decomposition reaction, the reaction rate constant when the decomposition reaction started to be stable was 5.1 $s^{-1}$. The time when the decomposition reaction started to be stable was the time when the variation in the reaction rate constant became ± 1% or less. Regarding this reaction rate constant, Table 1 shows the regeneration rate of the regenerated catalyst C1 when the reaction rate constant of the nitrous oxide-decomposing reaction using the new catalyst (a) in Production Example 1 is set to 1.

<Comparative Example 2>

A regeneration step and a nitrous oxide contact step were performed in the same manner as in Example 1 except that in the regeneration step of Example 1, the electric furnace temperature was raised to 350°C, and heat treatment was then performed at a temperature of 350°C for 3 hours to obtain a regenerated catalyst C2. In this decomposition reaction, the reaction rate constant when the decomposition reaction started to be stable was 1.7 $s^{-1}$. The time when the decomposition reaction started to be stable was the time when the variation in the reaction rate constant became ± 1% or less. Regarding this reaction rate constant, Table 1 shows the regeneration rate of the regenerated catalyst C2 when the reaction rate constant of the nitrous oxide-decomposing reaction using the new catalyst (a) in Production Example 1 is set to 1.

Table 1

|  | Heat treatment conditions | | Regeneration rate |
|---|---|---|---|
|  | Temperature | Time |  |
| Example 1 | 200°C | 3 hours | 1.21 |
| Example 2 | 250°C | 3 hours | 1.19 |
| Example 3 | 300°C | 3 hours | 1.37 |
| Comparative Example 1 | 150°C | 3 hours | 0.88 |
| Comparative Example 2 | 350°C | 3 hours | 0.29 |

The results shown in Table 1 have clearly demonstrated that when the heat treatment temperature is too low or too high even under the oxidizing gas atmosphere, the deteriorated catalyst (b) used in the nitrous oxide-decomposing reaction cannot be efficiently regenerated; and when the obtained regenerated catalyst C1 or C2 is used for the nitrous oxide-decomposing reaction, the reaction rate constant is small and nitrous oxide cannot be efficiently decomposed (the regeneration rate of the nitrous oxide-decomposing catalyst is low).

By contrast, when the deteriorated catalyst (b) is heat-treated in a temperature range of 200 to 300°C under an oxidizing gas atmosphere, the deteriorated catalyst (b) can be efficiently regenerated even in the heat treatment for 3 hours. When any of the obtained regenerated catalysts 1 to 3 is used for the nitrous oxide-decomposing reaction, the reaction rate constant is large and nitrous oxide can be efficiently decomposed (the regeneration rate of the nitrous oxide-decomposing catalyst is high). In addition, the reaction rate constant of any of the regenerated catalysts 1 to 3 is larger than the reaction rate constant of 5.1 s$^{-1}$ in the second nitrous oxide-decomposing reaction continuously performed without performing the deteriorated catalyst (b) regeneration step in Production Example 2. Thus, the catalytic activity of the deteriorated catalyst (b) is found to be successfully recovered.

The above results have demonstrated that even for a catalyst whose catalytic activity is once deteriorated by being used in the nitrous oxide-decomposing step, the catalytic activity of the nitrous oxide-decomposing catalyst can be recovered by performing the regeneration step, and the cost of decomposing nitrous oxide and the amount of deteriorated catalyst discarded can thus be reduced. In addition, the present invention makes it possible to decompose nitrous oxide while suppressing a decrease in decomposition efficiency during the decomposition step. Also, a plurality of decomposition steps can be continuously performed.

INDUSTRIAL APPLICABILITY

The present invention can provide a method of regenerating a nitrous oxide-decomposing catalyst such that a deactivated nitrous oxide-decomposing catalyst can be efficiently regenerated, and a method of decomposing nitrous oxide while using a nitrous oxide-decomposing catalyst regenerated by the regeneration method.

**Claims**

1.    A method of regenerating a nitrous oxide-decomposing catalyst, which comprises the step of heat-treating a nitrous oxide-decomposing catalyst under a condition in an oxidizing gas atmosphere at a temperature of 175 to 325°C, wherein the nitrous oxide-decomposing catalyst comprises a titanium oxide-containing carrier carrying a component containing at least one kind selected from the group consisting of ruthenium and ruthenium compounds, and has been used for a nitrous oxide-decomposing reaction.

2.    The method of regenerating a nitrous oxide-decomposing catalyst according to claim 1, wherein the oxidizing gas is air.

3.    A method of decomposing nitrous oxide, which comprises the step of, after the method of regenerating a nitrous oxide-decomposing catalyst according to claim 1 or 2, bringing the nitrous oxide-decomposing catalyst regenerated by the regeneration method into contact with a nitrous oxide-containing gas containing nitrous oxide.

4. The method of decomposing nitrous oxide according to claim 3, wherein the nitrous oxide-containing gas comprises at least one gas selected from the group consisting of nitrogen, carbon monoxide, carbon dioxide, water vapor, oxygen, hydrogen, ammonia, nitrogen monoxide, nitrogen dioxide, and hydrocarbons.

## INTERNATIONAL SEARCH REPORT

| International application No. |
| --- |
| **PCT/JP2022/024117** |

### A. CLASSIFICATION OF SUBJECT MATTER

***B01J 23/96***(2006.01)i; ***B01D 53/86***(2006.01)i; ***B01D 53/96***(2006.01)i; ***B01J 23/46***(2006.01)i
FI: B01J23/96 A ZAB; B01J23/46 301A; B01D53/86 222; B01D53/96 500

According to International Patent Classification (IPC) or to both national classification and IPC

### B. FIELDS SEARCHED

Minimum documentation searched (classification system followed by classification symbols)

B01J21/00-38/74; B01D53/86-53/90,53/94-53/96

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580 (JDreamIII); CAplus (STN)

### C. DOCUMENTS CONSIDERED TO BE RELEVANT

| Category* | Citation of document, with indication, where appropriate, of the relevant passages | Relevant to claim No. |
| --- | --- | --- |
| A | JP 2002-253967 A (SHOWA DENKO K.K.) 10 September 2002 (2002-09-10) claim 14, paragraphs [0038]-[0044], [0060] | 1-4 |
| A | JP 5-305219 A (BABCOCK-HITACHI K.K.) 19 November 1993 (1993-11-19) paragraphs [0012], [0013], [0023]-[0026] | 1-4 |
| A | JP 6-218232 A (SAKAI CHEMICAL INDUSTRY CO., LTD.) 09 August 1994 (1994-08-09) claim 1, paragraphs [0007]-[0009], example 31 | 1-4 |
| A | JP 2002-320863 A (NIPPON SHOKUBAI CO., LTD.) 05 November 2002 (2002-11-05) claim 2, column 2, line 33 to column 4, line 42, example 1 | 1-4 |
| A | JP 2020-520797 A (COVESTRO DEUTSCHLAND AG) 16 July 2020 (2020-07-16) claims, example 6 | 1-4 |

☐ Further documents are listed in the continuation of Box C. ☑ See patent family annex.

| | | |
| --- | --- | --- |
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 August 2022** | **16 August 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/024117**

| Patent document cited in search report | | | Publication date (day/month/year) | Patent family member(s) | | | Publication date (day/month/year) |
|---|---|---|---|---|---|---|---|
| JP | 2002-253967 | A | 10 September 2002 | US 2003/0181324 A1 claim 14, paragraphs [0098]-[0105], [0121]-[0123] WO 2002/068117 A1 EP 1289652 A1 CN 1457271 A KR 10-2003-0003265 A | | | |
| JP | 5-305219 | A | 19 November 1993 | (Family: none) | | | |
| JP | 6-218232 | A | 09 August 1994 | (Family: none) | | | |
| JP | 2002-320863 | A | 05 November 2002 | (Family: none) | | | |
| JP | 2020-520797 | A | 16 July 2020 | US 2021/0154657 A1 claims, examples 6 WO 2018/210770 A1 EP 3403723 A1 CN 110621403 A KR 10-2020-0010239 A | | | |

Form PCT/ISA/210 (patent family annex) (January 2015)

**EP 4 434 622 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06218232 A

**Non-patent literature cited in the description**

- Catalyst Preparation Chemistry. Kodansha Ltd, 1989, 211
- Catalyst Engineering Course, Handbook of Catalysts Using Any of 10 Elements. Chijinshokan, Co. Ltd, 1978, 254
- Metal Oxides and Composite Oxides. Kodansha Ltd, 1980, 107

**17**